# FASCICULE DE BREVET EUROPEEN

(11) **EP 2 988 612 B1**
(45) Date de publication et mention de la délivrance du brevet: **29.06.2016**
(21) Numéro de dépôt: 15709245.3
(22) Date de dépôt: 11.02.2015
(51) Int. Cl.: A23L 13/00, A23L 17/00, A47J 37/00, A23L 5/10

(54) **PROCÉDÉ ET INSTALLATION POUR L'OBTENTION DE DENRÉES ALIMENTAIRES CONDITIONNÉES DANS UN CONTENANT ET COMPORTANT UN MARQUAGE D'ASPECT GRILLÉ**
VERFAHREN UND VORRICHTUNG ZUM ERHALT VON IN EINEM BEHÄLTER VERPACKTEN LEBENSMITTELN MIT EINER MARKIERUNG FÜR GEGRILLTES AUSSEHEN
METHOD AND EQUIPMENT FOR OBTAINING FOODSTUFFS PACKAGED IN A CONTAINER AND COMPRISING MARKING WITH A GRILLED APPEARANCE

(30) Priorité: 13.02.2014 FR 1451110
(43) Date de publication de la demande: 02.03.2016
(73) Titulaire: Saupiquet, 92407 Courbevoie Cedex (FR)
(72) Inventeur: CAILLAUD, Lionel, F- 44410 Herbignac (FR); LE GARS, Nicolas, F-56870 Baden (FR); BOYARD, Jean-François, F-Quimper 29000 (FR)
(74) Mandataire: Coralis Harle
(86) Numéro de dépôt international: PCT/FR2015/050338
(87) Numéro de publication internationale: WO 2015/121587

(56) Documents cités:
- FR-A1- 2 934 120
- FR-A1- 2 990 826
- JP-A- 2005 137 284
- US-A1- 2009 092 718

## Description

### DOMAINE TECHNIQUE AUQUEL SE RAPPORTE L'INVENTION

La présente invention se rapporte à un procédé et une installation pour l'obtention de denrées alimentaires conditionnées dans un contenant et comportant un marquage d'aspect grillé. La présente invention a également trait à une denrée alimentaire comportant un tel marquage d'aspect grillé.

### ARRIERE-PLAN TECHNOLOGIQUE

Certaines denrées alimentaires se prêtent particulièrement bien à des traitements à chaud du type « grillage » (ou « grill » ou « grillade »).

Le grillage consiste en une cuisson de toute ou partie de la surface d'une denrée alimentaire par l'action directe de la chaleur émise par rayonnement ou par contact, qui peut conduire à un phénomène superficiel du type caramélisation ou du type réaction de Maillard.

C'est notamment le cas de la chair de certains poissons, tels que la sardine, le maquereau ou le thon, mais également de la viande.

Différentes méthodes de grillage existent à cet effet, à savoir :
- une méthode de grillage de la surface complète des denrées alimentaires, sans zébrures apparentes, et
- une méthode de grillage générant des zébrures apparentes sur la surface des denrées.

Diverses solutions ont été proposées dans l'état de la technique afin de réaliser un tel grillage.

Le document FR 2 934 120 décrit un procédé de traitement de pièces de viande cuisinables au four à micro-ondes pour leur conférer l'aspect extérieur de viande grillée. Ce procédé comprend notamment les étapes suivantes : le tranchage du muscle en pièces de viande individualisées, le marquage d'au moins une partie de la surface des pièces et le conditionnement des pièces dans un emballage micro-ondable. En particulier, l'étape de marquage s'effectue via un tunnel de cuisson spécifique comprenant par exemple deux rouleaux rotatifs, chauffés indépendamment l'un de l'autre et aptes à rouler sur les deux surfaces principales de la pièce de viande pour la marquer.

Le document JP 2005 137 décrit un procédé pour produire de la viande rôtie comprenant les étapes consistant à : couper la viande en tranches fines, assaisonner la viande avant ou après l'étape de coupage susmentionnée ; rôtir les fines tranches par chaleur rayonnante et conditionner sous vide.

Le document US 2009/0092718 décrit également un procédé de marquage spécifique aux poissons et aux crustacés. Ce document enseigne en particulier le procédé de marquage comprenant les étapes consistant à : congeler les denrées alimentaires ; les amener dans un four et les chauffer afin de réduire la charge microbienne, dénaturer la surface de ces denrées sur une épaisseur de 1-2 mm, puis les marquer, en général, sur leur face avant et leur face arrière, et enfin les conditionner sous emballage. En particulier, l'étape de marquage s'effectue au moyen de deux rouleaux marqueurs nervurés aptes à avancer sur un convoyeur présentant des rainures, ces rainures étant configurées pour coopérer avec les nervures des marqueurs de sorte à pouvoir laisser des marques de grillage sur la face inférieure et la face supérieure de la denrée.

Le document FR 2 990 826 décrit un procédé de conservation de denrées alimentaires, en particulier la longue conservation de denrées comprenant du poisson (thon, saumon, maquereau, morue, etc.) et se présentant sous forme de pavé.

Le procédé comprend notamment, les étapes de préparation suivantes:
- on prépare du poisson cru (filetage) en y ajoutant un produit rétenteur d'eau (à base de carraghénanes),
- on forme un pavé,
- on grille les portions de poisson (étape de braisage suivie d'une étape de marquage) ;
- on conditionne (emballage et scellage);
- on stérilise les denrées.

En particulier, l'étape de marquage est une étape permettant d'assurer un marquage sur le pavé, donnant une impression d'une cuisson sur un barbecue. Le marquage est réalisé par des lignes et est mis en oeuvre juste après l'étape de braisage, de façon à bénéficier de l'inertie de chauffe pour marquer le produit par un contact très rapide d'une pièce métallique chauffée à haute température avec le pavé. A titre d'exemple, le temps de contact est compris entre une et deux secondes, et la température est voisine de 450°C. On passe ensuite à une étape de contrôle de poids du pavé, suivie d'une étape d'emballage et d'une étape de scellage.

Généralement, l'emballage présente la forme d'un pochon stérilisable.

Toutefois, les méthodes de grillage actuelles telles que décrites ci-dessus, notamment avec zébrures, ne sont pas particulièrement adaptées aux denrées alimentaires destinées à être conditionnées en contenant, notamment en conserve.

En effet, les méthodes de grillage précitées nécessitent une dépose des denrées alimentaires sur un convoyeur pour leur grillage individuel, cela avant conditionnement.

Or une telle approche présente quelques désavantages, du fait qu'elle oblige à mettre en oeuvre:
- une étape supplémentaire de dépose des denrées alimentaires sur un convoyeur pour leur grillage,
- une étape additionnelle de reprise des denrées alimentaires sur le convoyeur après grillage, pour les mettre dans leur contenant final.

Ces étapes additionnelles de manipulation des denrées génèrent par conséquent des coûts supplémentaires, du fait notamment de la perte de matière et de la main d'oeuvre nécessaire.

Il existe par conséquent un besoin dans l'état de la technique, d'un nouveau procédé simplifié d'obtention de denrées alimentaires présentant, au moins en partie, un marquage d'aspect grillé.

Le but de la présente invention est ainsi de proposer un nouveau procédé d'obtention de denrées alimentaires présentant, au moins en partie, un marquage d'aspect grillé dans un contenant, notamment un contenant non déformable du type boîte de conserve, évitant au moins en partie les inconvénients précités.

### OBJET DE L'INVENTION

Dans ce contexte, la Demanderesse a développé une solution pour l'obtention de denrées alimentaires présentées en conditionnement et munies d'un marquage d'aspect grillé, cela sans manipulations supplémentaires susceptibles de conduire à un surcoût et à des pertes de matière.

La Demanderesse s'est aussi attachée au développement d'un procédé d'obtention de denrées alimentaires, tels que des filets de poissons (sardine, maquereau, thon) présentant, au moins en partie, un marquage d'aspect grillé, qui soit en particulier optimisé à un contenant non déformable ou à un contenant déformable du type enveloppe souple stérilisable. Le procédé est également optimisé de façon à ce que le marquage s'effectue sur toute la surface libre, dite « utile », des denrées alimentaires contenues dans le contenant.

A cet effet, la présente invention concerne un procédé pour l'obtention de denrées alimentaires conditionnées dans un contenant, l'une au moins desdites denrées alimentaires comportant un marquage d'aspect grillé,
lequel procédé comprend les étapes suivantes :
- une étape de fourniture de denrées alimentaires à conditionner,
- une étape de dépose des denrées alimentaires dans ledit contenant comportant une ouverture d'accès, de sorte que, d'une part, une surface libre desdites denrées alimentaires s'étende en regard de ladite ouverture d'accès dudit contenant, et, d'autre part, lesdites denrées alimentaires reposent sur une surface de support rigide, et
- une étape de grillage au cours de laquelle ledit marquage d'aspect grillé est appliqué sur ladite surface libre des denrées alimentaires présentes dans le contenant.

Dans le cadre de l'invention, la surface libre « utile » desdites denrées alimentaires se rapporte ainsi à la surface correspondant à l'ouverture du contenant, c'est-à-dire aussi à la surface des denrées alimentaires qui est disponible et en contact avec l'extérieur (non recouverte par d'autres denrées alimentaires). A titre d'exemple, la surface libre « utile » peut correspondre à la surface supérieure d'un ou de plusieurs filets de poisson/viande ou à une ou plusieurs portions de surface supérieure d'un ou de plusieurs filets de poisson/viande.

De préférence, ladite surface libre « utile » desdites denrées alimentaires est l'unique surface qui est grillée au cours de l'étape de grillage.

L'approche selon l'invention permet d'insérer l'étape de grillage dans un procédé habituel de conditionnement de denrées alimentaires en contenant (notamment de type conserve), et donc à ne pas avoir à subir les contraintes liées aux techniques actuelles de marquage d'aspect grillé, à savoir une étape de dépose des denrées alimentaires sur un convoyeur pour y être marquée et une étape de reprise desdites denrées afin d'être par la suite conditionnées. Au contraire, selon le procédé de l'invention, l'étape de conditionnement dans le contenant final est préalable à l'étape de marquage.

En particulier, le contenant peut être rigide ou semi-rigide (boîte de conserve plastique ou métallique) ou peut être déformable (enveloppe stérilisable). De préférence, le contenant sera rigide ou semi-rigide.

Selon une forme de réalisation préférée, l'étape de grillage comprend les étapes suivantes :
- amener dans une position active des moyens de marquage présentant une surface de marquage, lesdits moyens de marquage étant aptes à appliquer ledit marquage d'aspect grillé, cela en regard de l'ouverture d'accès du contenant et au moins à proximité de la surface libre des denrées alimentaires présentes dans le contenant(avantageusement en contact de la surface libre des denrées alimentaires présentes dans le contenant),
- maintenir lesdits moyens de marquage dans ladite position active, pendant un temps déterminé, pour appliquer le marquage d'aspect grillé, et
- écarter lesdits moyens de marquage par rapport à ladite surface libre des denrées alimentaires présentes dans le contenant.

Avantageusement, ladite surface de marquage desdits moyens de marquage est sensiblement égale (au jeu près) à la surface de l'ouverture du contenant, de sorte à pouvoir griller ladite surface libre desdites denrées alimentaires.

En particulier, ladite surface de marquage s'emboîte dans ladite ouverture dudit contenant lors de la position active de l'étape de grillage.

Selon une caractéristique de l'invention, ladite surface de marquage comprend une empreinte.

Ainsi, le procédé selon l'intention est optimisé afin de faire correspondre la surface de grillage/marquage des moyens de marquage avec la surface libre/utile des denrées alimentaires. Par exemple, la surface d'une empreinte de marquage est en particulier optimisée pour correspondre à la surface de l'ouverture d'accès du contenant.

Dans ce cadre, lors de l'étape de grillage, le temps de maintien en position active est généralement compris dans une gamme de 0,5s à 5s (de préférence de 0,5s à 2s et de préférence encore de 0,5 à 1,5s), et la température des moyens de marquage est comprise dans une gamme de 200°C à 800°C (de préférence de 60°C à 800°C).

Selon d'autres caractéristiques avantageuses de réalisation, pouvant être prises en combinaison ou indépendamment les unes des autres :
- l'étape de grillage s'effectue au moyen d'une empreinte qui est, d'une part, munie d'un relief déterminant le marquage appliqué sur les denrées alimentaires et, d'autre part, élevée à une température adaptée à générer un marquage à chaud ;
- le procédé comprend encore, après l'étape de grillage, une étape d'obturation de l'ouverture d'accès du contenant ;
- le procédé comprend encore, entre l'étape de dépose et l'étape de grillage, une étape de tassement au cours de laquelle est appliquée une pression sur ladite surface libre des denrées alimentaires présentes dans le contenant ;
- le procédé comprend encore, avant l'étape de dépose ou après l'étape de grillage, une étape d'ajout d'ingrédients additionnels (notamment légumes et/ou sauce et/ou assaisonnement) dans le contenant ;
- le procédé comprend encore, suite à l'étape d'obturation, une étape de stabilisation, par exemple de stérilisation, du contenu du contenant ;
- les denrées alimentaires comprennent des filets de poisson.

La présente invention concerne également une installation pour l'obtention de denrées alimentaires conditionnées dans un contenant l'une au moins desdites denrées alimentaires comportant un marquage d'aspect grillé, en particulier sur sa surface libre.

Cette installation comprend les postes successifs suivants, agencés en série :
- un poste de dépose muni de moyens de dépose de denrées alimentaires dans ledit contenant comportant une ouverture d'accès et une paroi de fond,
- un poste de grillage muni (i) de moyens de convoyage des contenants, (ii) de moyens de marquage présentant une surface de marquage pour l'application dudit marquage sur les denrées alimentaires, (iii) des moyens de manoeuvre, pour assurer le déplacement relatif entre les moyens de convoyage et les moyens de marquage, de sorte à positionner les moyens de marquage en regard de l'ouverture d'accès dudit contenant et les amener temporairement au moins à proximité des denrées alimentaires contenues dans le contenant (de préférence en contact avec celles-ci) pour y appliquer ledit marquage d'aspect grillé, et de préférence,
- un poste d'obturation, muni de moyens d'obturation de ladite ouverture d'accès dudit contenant.

De préférence, les moyens de marquage sont en contact avec les denrées alimentaires.

Le contenant est rigide ou semi-rigide (boîte de conserve) ou est déformable (enveloppe stérilisable). Comme on le verra ci-après, lorsque le contenant est non déformable, sa paroi de fond repose en général directement sur les moyens de convoyage qui maintiennent les contenants en place ; tandis que lorsque le contenant est déformable, une partie du contenant formant le fond repose sur une surface de support rigide, formée par exemple par un berceau support qui est rapporté ou appartient aux moyens de convoyage. Avantageusement, ladite surface de marquage desdits moyens de marquage est sensiblement égale (au jeu près) à la surface de l'ouverture d'accès du contenant.

En particulier, ladite surface de marquage est apte à s'emboîter dans ladite ouverture d'accès dudit contenant lors de l'étape de grillage.

Selon un mode de réalisation préféré, ladite surface de marquage desdits moyens de marquage équipant le poste de grillage correspond au moins à une empreinte qui est munie d'un relief déterminant le marquage destiné à être appliqué et qui coopère avec des moyens de chauffage pour son élévation en température.

Dans ce cadre, les moyens de chauffage sont avantageusement ménagés :
- en arrière de ladite empreinte, pour assurer le chauffage de ladite empreinte par conduction thermique ou par induction et/ou
- en regard de ladite empreinte, pour appliquer directement le chauffage sur ladite empreinte, et/ou
- au sein de ladite empreinte pour assurer également un chauffage par induction.

Selon d'autres caractéristiques avantageuses de réalisation, pouvant être prises en combinaison ou indépendamment les unes des autres :
- les moyens de manoeuvre coopèrent avec les moyens de marquage pour leur manoeuvre entre : - une position active dans laquelle lesdits moyens de marquage se situent à une première distance des moyens de convoyage, adaptée au marquage des denrées alimentaires contenues dans le contenant, et - une position inactive dans laquelle lesdits moyens de marquage se situent à une seconde distance des moyens de convoyage, supérieure à ladite première distance, adaptée à écarter lesdits moyens de marquage par rapport au contenant ;
- dans une première réalisation du poste de grillage, les moyens de convoyage se présente sous la forme d'un carrousel dans lequel les moyens de convoyage tournent autour d'un axe central de rotation, avantageusement la rotation des moyens de convoyage étant synchronisée avec une rotation des moyens de marquage et des moyens de manoeuvre associés ;
- dans une seconde réalisation du poste de grillage, les moyens de convoyage se déplacent linéairement en dessous des moyens de marquage et des moyens de manoeuvre associés, ce déplacement linéaire étant commandé pour amener séquentiellement les denrées alimentaires dans leur contenant à l'aplomb des moyens de marquage ;
- les moyens de manoeuvre provoquent une translation des moyens de marquage perpendiculairement à la direction de déplacement des moyens de convoyage ;
- le cas échéant, les moyens de marquage, avec leurs empreintes respectives, sont au nombre de 20 à 40 ;
- le poste de grillage comprend encore : - des moyens pour l'aspiration des effluents gazeux générés au sein dudit poste de grillage, et/ou - le cas échéant, des moyens pour le nettoyage de la ou des empreintes.

La présente invention concerne également le produit d'alimentation comprenant des denrées alimentaires conditionnées dans un contenant. Seule la surface libre desdites denrées alimentaires, s'étendant au niveau d'une ouverture d'accès dudit contenant destinée à recevoir un élément d'obturation amovible, comporte un marquage d'aspect grillé.

Ainsi, le produit d'alimentation selon l'invention est caractérisé en ce que la surface des denrées alimentaires qui est marquée correspond uniquement à la surface libre desdites denrées alimentaires, c'est-à-dire à la surface correspondant à l'ouverture du contenant. Par conséquent, les autres surfaces des denrées alimentaires (surface ne s'étendant pas au regard de l'ouverture du contenant ou surface recouverte par au moins une portion de denrée alimentaire) ne sont pas marquées.

### DESCRIPTION DETAILLEE D'UN MODE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est un schéma bloc illustrant les principales étapes du procédé selon l'invention pour l'obtention de denrées alimentaires conditionnées dans un contenant et comportant un marquage d'aspect grillé ;
- la figure 2 est une vue schématique, selon un plan de coupe verticale, d'un contenant dans lequel sont déposées les denrées alimentaires à griller, telles que deux filets de poisson ;
- la figure 3 représente, schématiquement, l'étape de grillage des denrées alimentaires présentes dans le contenant ;
- la figure 4 représente, schématiquement, le contenant qui est obturé suite à l'étape de grillage des denrées alimentaires qu'il contient ;
- la figure 5 illustre, schématiquement, une installation selon l'invention pour la mise en oeuvre du procédé selon l'invention ;
- la figure 6 illustre, schématiquement et en perspective, un mode de réalisation du poste de grillage sous forme de carrousel ;
- la figure 7 est une vue en perspective d'une forme de réalisation particulière des moyens de marquage, notamment destinés à équiper le poste de grillage de l'installation selon les figures 5 et 6 ; et
- la figure 8 illustre, schématiquement et en perspective, un second mode de réalisation du poste de grillage utilisant sur un convoyeur linéaire.

La présente invention concerne un procédé et une installation pour l'obtention de denrées alimentaires qui sont conditionnées dans un contenant, et qui comportent, pour certaines au moins, un marquage d'aspect grillé.

A cet égard, la présente invention a trait, en substance, à appliquer le marquage d'aspect grillé sur les denrées alimentaires une fois qu'elles sont rapportées dans leur contenant final.

Cette approche a l'intérêt de permettre un simple ajustement sur des procédés et installations qui sont habituellement mis en oeuvre pour l'obtention de denrées alimentaires conditionnées dans un contenant.

Egalement, le procédé est optimisé afin de faire correspondre parfaitement la surface de marquage des moyens de marquage avec la surface libre/disponible des denrées alimentaires, qui sera d'ailleurs la surface visible pour le consommateur.

La présente invention intéresse ainsi toute « denrée alimentaires » ou « produit d'alimentation » (en particulier tout produit brut ou élaboré qui entre dans l'alimentation humaine ou animale) susceptible de subir une opération de grillage.

On entend ainsi notamment la « viande », qui doit être comprise dans sa portée générale, à savoir toute chair comestible d'un animal, y compris la chair de poisson.

Par « chair de poisson » ou « poisson », on entend notamment un filet de poisson, c'est-à-dire un morceau de chair prélevée parallèlement à l'arête dorsale, désarêté, et éventuellement dépiauté.

Par « poisson », on entend en particulier le maquereau, la sardine ou le thon.

Cette denrée alimentaire est conditionnée dans un contenant « non déformable » ou « déformable ».

On entend ici par « non déformable », un contenant apte à directement supporter une étape de convoyage, en particulier via un carrousel comprenant des moyens de convoyage et des moyens de manoeuvre, et apte à supporter une élévation de température due notamment aux moyens de chauffage se trouvant en général à proximité du contenant. A titre d'exemple, un contenant non déformable selon l'invention peut correspondre à une boîte en conserve métallique ou une barquette en plastique rigide ou semi-rigide.

En outre, on entend par « déformable » un contenant se présentant sous la forme d'une enveloppe souple, du type pochon stérilisable usuellement utilisé dans le domaine de l'agroalimentaire.

Dans le cadre de l'invention, l'une au moins des denrées alimentaires présente dans le contenant est destinée à comporter un marquage d'aspect grillé issu d'une technique de grillage.

Par « grillage » (ou « grill » ou « grillé »), on entend en particulier une cuisson de tout ou partie de la surface de la denrée alimentaire qui est soumise à l'action directe d'une chaleur émise par rayonnement ou par contact, pouvant conduire à un phénomène de caramélisation superficielle et/ou une réaction de Maillard.

De manière générale, par « marquage d'aspect grillé », on entend une denrée alimentaire dont l'une des surfaces est grillée partiellement ou totalement.

Le « marquage d'aspect grillé » obtenu, sur la surface de la denrée alimentaire, peut être :
- du type uniforme (c'est-à-dire sans dessin notamment du type zébrures), correspondant à un grillage uniforme ou approximativement uniforme de cette surface, ou
- du type « dessiné » ou « avec motif », présentant par exemple un dessin/motif zébré (rayures allongées, parallèles ou non, parcourant la surface de la denrée alimentaire) ou toute autre dessin/motif souhaité, correspondant à un grillage d'intensité variable sur cette surface.

En particulier, pour un marquage d'aspect grillé avec motif, certaines zones grillées ressortent par contraste, du fait de leur coloration.

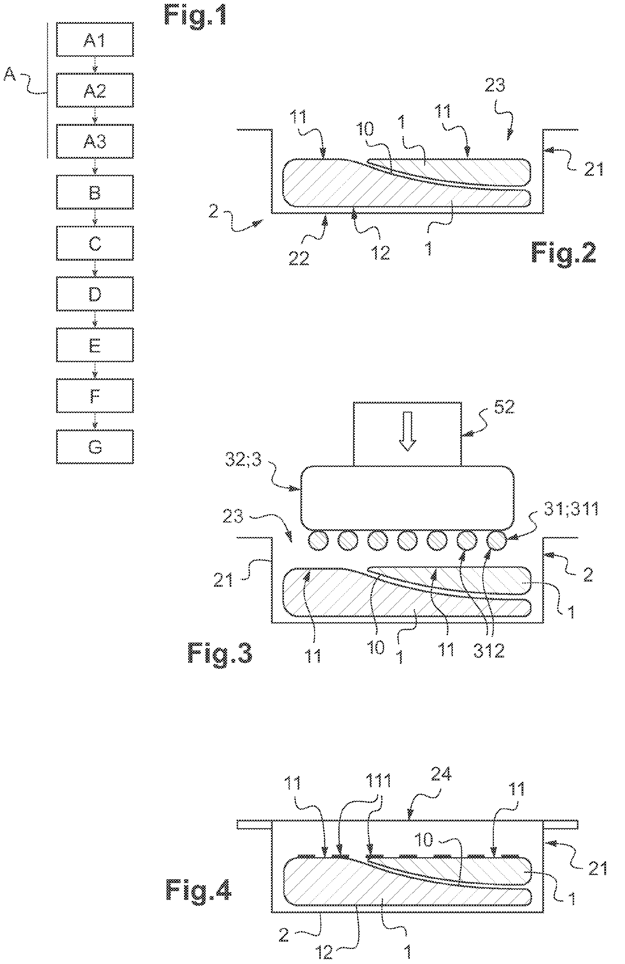

Le procédé et l'installation selon l'invention, pour l'obtention de telles denrées alimentaires marquées, sont décrits ci-dessous en relation avec les figures 1 à 8.

Un procédé selon l'invention est illustré de manière générale sur la figure 1.

Ce procédé selon l'invention comprend avantageusement les étapes successives suivantes :
- une étape A de fourniture des denrées alimentaires à conditionner,
- une étape B de dépose des denrées alimentaires dans le contenant de réception,
- une étape C de tassage (ou étape de tassement) des denrées alimentaires présentes dans le contenant,
- une étape D de grillage des denrées alimentaires présentes dans le contenant,
- une étape E d'ajout d'ingrédients additionnels dans le contenant,
- une étape F d'obturation du contenant, et
- une étape G de stabilisation du contenu du contenant.

L'étape de fourniture A peut comporter une succession d'opérations visant à transformer le produit brut en une denrée alimentaire adaptée à la consommation.

Comme précisé ci-dessus, les « denrées alimentaires » en question peuvent être tout produit brut ou élaboré qui entre dans l'alimentation humaine ou animale, susceptible de subir un phénomène de grillage.

Dans le cas d'une denrée de type « viande », cette étape de fourniture A a trait en particulier à séparer un morceau de viande par rapport au reste de l'animal.

En relation avec la figure 1, pour une denrée alimentaire du type filet de poisson, cette étape de fourniture A comprend par exemple les opérations successives suivantes :
- suite à la pêche du poisson, une opération A1 comprenant par exemple une congélation et/ou décongélation et/ou étêtage/vidage du poisson pêché ;
- une éventuelle opération A2 de cuisson du poisson, et
- une opération A3 de parage et de levée des filets, suivie éventuellement d'une étape de cubage, pour l'obtention de la denrée alimentaire prête à être conditionnée (par exemple, des pièces de thon).

Eventuellement, lors de l'étape A, les denrées alimentaires peuvent être mis en contact, par exemple par pulvérisation, par trempage ou encore par barattage, avec un additif et/ou un auxiliaire technologique. Cet additif et/ou auxiliaire technologique peut permettre, à titre d'exemple, de favoriser le relèvement d'une coloration par la température.

L'étape de dépose B, illustrée schématiquement sur la figure 2, comprend au moins l'étape suivante : rapporter les denrées alimentaires 1 dans leur contenant 2 de réception.

Ce remplissage s'effectue manuellement ou automatiquement, de sorte à ranger convenablement les denrées alimentaires 1 au sein du contenant 2.

Le contenant 2 peut être par exemple un contenant non déformable du type « conserve » métallique ou barquette en matière plastique rigide ou semi rigide (à savoir apte à supporter une étape de convoyage et une élévation de températures due par exemple au rayonnement de l'empreinte et/ou à de l'air chaud émis à proximité du contenant 2).

Selon l'invention, une « conserve » est avantageusement une boîte métallique (généralement cylindrique ou parallélépipédique) réalisée par exemple en fer blanc ou en aluminium, destinée à être stérilisée et fermée de manière étanche ; tandis qu'une barquette en plastique rigide ou semi rigide peut être réalisée par exemple en polypropylène (PP) ou en multicouches de polypropylène/ ethylène-alcool vinylique (EVOH)/ polypropylène (PP/EVOH/PP).

Dans un tel cas, comme le montre plus particulièrement la figure 2, le contenant 2 comporte une paroi latérale 21 dont la bordure inférieure est raccordée à une paroi de fond 22, formant une surface de support rigide, et dont la bordure supérieure délimite une ouverture d'accès 23 opposée à la paroi de fond 22.

Les denrées alimentaires 1 sont placées au sein du contenant 2 de sorte à reposer sur la surface de support rigide formée par sa paroi de fond 22 et être, de préférence, sensiblement à effleurement au bord de l'ouverture d'accès 23.

Ainsi, ces denrées alimentaires 1 conditionnées comportent notamment, d'une part, une surface libre 11 (ou affleurante) s'étendant en regard de l'ouverture d'accès 23 du contenant 2 et, d'autre part, une surface d'appui 12 reposant sur la paroi de fond 22.

Cette surface libre 11 des denrées alimentaires 1 peut être formée par la surface d'une unique denrée alimentaire ou par la surface de plusieurs denrées alimentaires en présence.

Tel que représenté sur les figures 2 à 4, les denrées alimentaires 1 correspondent à deux filets de poisson se chevauchant partiellement et présentant une surface de jonction 10, une surface libre 11 correspondant à la surface supérieure des deux filets de poisson non recouverte par l'un ou l'autre des filets et une surface d'appui 12 correspondant à la surface inférieure des deux filets de poisson en contact avec la paroi du fond 22. En général, la surface libre 11 des filets de poisson arrive à effleurement au bord de l'ouverture d'accès du contenant, de sorte qu'elle est accessible pour son marquage ultérieur. Tel qu'illustré sur la figure 4, des marquages 111 sont uniquement présents sur les surfaces libres 11 dites surfaces « utiles » de ces deux filets de poissons.

Selon une variante du procédé non représentée, lorsque, selon l'invention, on utilise un contenant « déformable », se présentant sous la forme d'une enveloppe souple, celui-ci est placé dans un berceau comprenant un fond rigide de telle sorte qu'une partie de cette enveloppe souple repose sur le fond rigide du berceau et qu'un bord de cette enveloppe souple délimite l'ouverture d'accès du contenant, opposée à ladite partie reposant sur le fond rigide du berceau. Les denrées alimentaires sont alors introduites dans le contenant de sorte qu'elles reposent sur la partie du contenant recouvrant le fond rigide du berceau et qu'une surface libre desdites denrées s'étend en regard de ladite ouverture d'accès du contenant.

Avant l'étape de dépose B des denrées alimentaires 1, des ingrédients additionnels (non représentés) peuvent être introduits dans le contenant 2 et déposés sur sa paroi de fond 22.

Ces ingrédients additionnels consistent avantageusement en des ingrédients solides (notamment des légumes).

Ces ingrédients additionnels sont ajoutés au travers de l'ouverture d'accès 23 du contenant 2 ; et les denrées alimentaires 1 sont déposées sur ces ingrédients.

De manière à optimiser le marquage à venir, une étape de tassement C peut être appliquée sur les denrées alimentaires 1 présentes dans le contenant 2.

L'étape C optionnelle permet de lisser la surface libre 11 des denrées alimentaires 1 en présence et d'assurer une hauteur maximale de ces dernières ; le cas échéant, cette étape de tassement C permet également un agencement optimal des ingrédients additionnels interposés entre la paroi de fond 22 du contenant 2 et les denrées alimentaires 1 sus-jacentes (les denrées alimentaires 1 servant d'interface lors du tassement).

Cette surface libre 11 des denrées alimentaires 1 est ainsi destinée à être lisse ou quasiment lisse (sans aspérités significatives), de sorte à obtenir un marquage optimal.

Cette étape de tassement C s'effectue par exemple au moyen d'un outil de tassement présentant une face d'appui lisse. A cet égard, l'étape de tassement C est ajustée de sorte que la face d'appui de l'outil de tassement descende à une distance fixe par rapport à la paroi de fond 22 du contenant 2.

L'étape de grillage D, illustrée schématiquement sur la figure 3, consiste à appliquer un marquage d'aspect grillé sur la surface libre 11 des denrées alimentaires 1 présentes dans le contenant 2.

Cette étape de grillage D permet l'application du marquage d'aspect grillé (ou grillage) :
(i) du type uniforme, ou approximativement uniforme, ou
(ii) du type « dessiné », présentant par exemple un aspect zébré (rayures allongées, parallèles ou non, parcourant la surface de la denrée alimentaire) ou toute autre aspect souhaité.

De préférence, le marquage d'aspect grillé est appliqué à chaud, avantageusement par le biais de moyens de marquage 3 qui produisent une chaleur apte à créer un phénomène de grillage de la surface de denrées alimentaires située à proximité, voire à son contact.

A cet effet, les moyens de marquage 3 comportent en particulier une empreinte 31 destinée à être élevée en température et à recouvrir (entièrement ou quasi-entièrement) la surface libre 11 des denrées alimentaires 1. Généralement, l'empreinte 31 vient s'emboiter dans l'ouverture d'accès 23 du contenant 2 de sorte à marquer la surface libre des denrées 1.

Ainsi, de par ces caractéristiques, le procédé selon l'invention est optimisé de sorte à permettre à la fois le calibrage des portions de denrées alimentaires, ainsi que leur surface de marquage, tout en évitant des étapes supplémentaires par rapport à l'art antérieur. En outre, tout la surface libre/disponible des denrées alimentaires est utilisée afin d'être marquée.

Pour un grillage « dessiné », l'empreinte 31 comporte un relief 311 qui comprend un ensemble de structures saillantes 312 qui sont ici chacune destinées à venir à proximité, voire de préférence en contact, avec la surface libre 11 en regard des denrées alimentaires 1.

La surface de ces structures saillantes 312 peut représenter entre 10% et 30%, de préférence environ 20%, de la surface totale de l'empreinte 31. Par une valeur entre 10% et 30%, on entend une valeur de 10%, 11 %, 12%, 13%, 14%, 15%, 16%, 17%, 18%, 19%, 20%, 21%, 22%, 23%, 24%, 25%, 26%, 27%, 28%, 29% et 30%.

Chaque structure saillante 312 est avantageusement destinée à constituer une partie du marquage d'aspect grillé.

L'aspect de ce relief 311, en particulier des structures saillantes 312, détermine ainsi l'aspect du dessin destiné à être appliqué sur les denrées alimentaires 1.

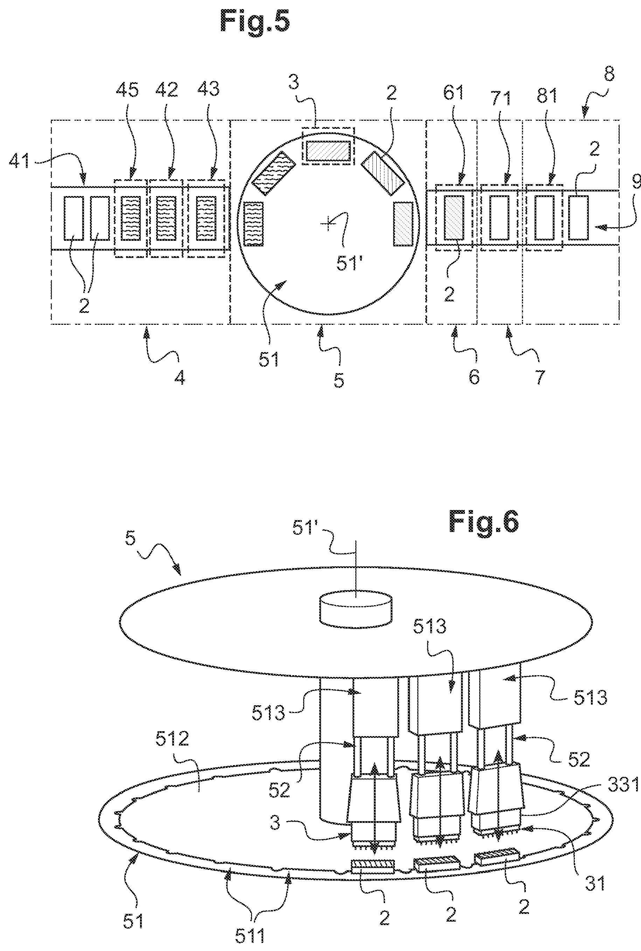

Une forme de réalisation particulière de ces moyens de marquage sera décrite ci-après en relation avec les figures 5 à 7.

De manière alternative, pour un grillage « uniforme », l'empreinte 31 est avantageusement pourvue d'une surface lisse ou plane, dépourvue de relief.

En pratique, cette étape de grillage D comprend avantageusement les étapes suivantes :
- amener, dans une position active, les moyens de marquage 3 en regard de l'ouverture d'accès 23 du contenant 2 et au moins à proximité, de préférence au contact, de la surface libre 11 des denrées alimentaires 1 présentes dans le contenant 2, de manière à initier l'étape de grillage D,
- maintenir les moyens de marquage 3 dans cette position active, pendant un temps déterminé, pour appliquer le marquage d'aspect grillé sur la surface libre 11 des denrées alimentaires 1 présentes dans le contenant 2, et
- écarter les moyens de marquage 3 par rapport à la surface libre 11 des denrées alimentaires 1 présentes dans le contenant 2, de sorte à finir l'étape de grillage D.

Par « à proximité », on entend avantageusement un espacement de l'empreinte 31 des moyens de marquage 3 (en particulier des structures saillantes 312), par rapport à la surface libre 11 des denrées alimentaires 1, de quelques millimètres au maximum, avantageusement inférieure à 2 mm.

Par « au contact », on entend avantageusement un appui de l'empreinte 31 des moyens de marquage 3 (en particulier des structures saillantes 312) sur la surface libre 11 des denrées alimentaires 1, sans enfoncement au niveau de cette surface libre 11 ou avec un léger enfoncement de l'ordre du millimètre (par exemple au maximum de 1 à 2 mm). Lors de cette étape de contact, il se peut ainsi que l'empreinte 31 exerce une action de légère compression sur les denrées alimentaires 1 (afin de les marquer).

On notera que, avantageusement, selon l'invention, les denrées alimentaires 1 reposant sur une surface de support rigide constituée par le fond 22 d'un contenant 2 (que ce fond soit rigide du fait que le contenant est « non déformable » ou qu'il recouvre le fond rigide d'un berceau dans lequel est placé le contenant « déformable »), cette surface de support rigide exerce sur les denrées alimentaires 1 une action de légère poussée s'opposant à l'action de légère compression exercée par les moyens de marquage 3 sur la surface libre 11 des denrées alimentaire 1. De cette manière, le marquage de cette surface libre 11 est correctement réalisé, net et sans abîmer les denrées alimentaires en question. Ce qui est particulièrement avantageux ici, c'est que les moyens de marquage 3 s'engagent directement à l'intérieur du contenant 2 via l'ouverture d'accès 23 pour venir marquer la surface libre 11 des denrées alimentaires 1 que ce contenant 2 contient (voir figure 3).

De préférence, le temps de maintien en position active des moyens de marquage 3 est avantageusement compris dans la gamme de 0,5 à 5 secondes, de préférence de 0,5 à 2 secondes et mieux encore de 0,5 à 1,5 secondes et est typiquement de l'ordre de 1s ; la température des moyens de marquage 3 est comprise quant à elle dans la gamme de 200°C à 800 °C, de préférence de 600 °C à 800 °C et typiquemetnde l'ordre de 750 °C.

Le couple température/temps de maintien est adapté à façon, de manière notamment - à obtenir un marquage ayant le bon aspect, - à apporter la bonne note organoleptique (notamment goût, texture) avant et après stérilisation et - à limiter le phénomène d'adhérence entre l'empreinte 31 des moyens de marquage 3 (notamment les structures saillantes 312) et la surface libre 11 des denrées alimentaires 1.

De manière générale, une augmentation de la température conduit à diminuer le temps de maintien en position active, et réciproquement.

Suite à cette étape de grillage D, la surface libre 11 des denrées alimentaires 1 est pourvue d'un marquage apparent 111 présentant un aspect grillé (figure 4).

Dans le cas d'un marquage « dessiné », le marquage 111 d'aspect grillé reproduit avantageusement le dessin des structures saillantes 312 équipant les moyens de marquage 3.

Dans le cas d'un marquage « uniforme », ce marquage 111 d'aspect grillé s'étend avantageusement sur toute (ou approximativement toute) la surface libre 11 des denrées alimentaires 1.

Suite à ce marquage, des ingrédients additionnels peuvent être introduits dans le contenant 2 au cours d'une étape E.

Les ingrédients additionnels sont ajoutés au travers de l'ouverture d'accès 23 du contenant 2, avant son obturation.

Ces ingrédients additionnels sont typiquement des épices, des aromates, des ingrédients liquides ou semi-liquides comme de l'huile et des sauces.

De préférence, ces ingrédients additionnels ne masquent pas le marquage 111 d'aspect grillé appliqué sur ladite surface libre 11 des denrées alimentaires 1 présentes dans le contenant 2.

L'étape d'obturation F, illustrée sur la figure 4, comprend la fermeture de l'ouverture d'accès 23 du contenant 2 au moyen d'un élément d'obturation 24 rapporté.

L'élément d'obturation 24 comporte par exemple - une paroi métallique munie d'une ligne d'amorce de rupture ou - une membrane pelable.

Une telle étape d'obturation F est bien connue dans les techniques tant pour des contenants en matière métallique qu'en matière plastique.

L'étape de stabilisation G, par exemple de stérilisation, est choisie parmi les techniques permettant une destruction (ou au moins une limitation du développement) des germes microbiens susceptibles d'être présents dans le contenant 2 fermé.

Cette étape de stérilisation G comprend par exemple le chauffage du contenant 2 fermé et de son contenu à une température donnée pendant un temps maitrisé.

Par exemple, le contenant 2 est placé dans un autoclave suivant un cycle comportant une étape dite de palier, avantageusement à une température de 121 °C.

D'autres techniques de stabilisations peuvent être envisagées, seules ou combinées, par exemple un traitement de pasteurisation ou encore des traitements n'impliquant pas nécessairement de traitements thermiques (comme une stabilisation à haute pression ou par introduction d'un gaz inerte tel que l'azote).

Le procédé selon l'invention permet ainsi d'obtenir un contenant 2, obturé et éventuellement stabilisé, dans lequel sont conditionnées des denrées alimentaires 1 dont la surface libre 11 (en regard de l'ouverture d'accès 23 obturée par l'élément d'obturation 24 rapporté) est pourvue d'un marquage 111 d'aspect grillé (figure 4).

Une installation selon l'invention est illustrée de manière générale sur les figures 5 à 7.

Cette installation comprend avantageusement les postes successifs suivants, agencés en série dans des positions amont et aval par rapport à un poste de grillage des denrées alimentaires, le cheminement des contenants s'effectuant dans un sens amont vers aval (tenant compte du sens de cheminement des contenants 2) :
- un poste amont 4 pour la dépose des denrées alimentaires 1 et d'ingrédients additionnels dans le contenant de réception 2 (dit encore « poste de dépose »),
- un poste intermédiaire 5, pour le grillage des denrées alimentaires 1 rapportées dans leurs contenants 2 (dit encore « poste de grillage »),
- un premier poste aval 6, pour le remplissage du contenant avec des ingrédients complémentaires (dit encore « poste de remplissage »),
- un second poste aval 7, pour l'obturation des contenants 2 suite au grillage des denrées alimentaires 1 (dit encore « poste d'obturation »), et
- un troisième poste aval 8, pour la stérilisation des contenants 2 suite à leur obturation (dit encore « poste de stérilisation »).

Le poste de dépose 4 comprend en particulier des moyens 41 pour le convoyage en série des contenants 2 en direction du poste de grillage 5.

Ces moyens de convoyage 41 consistent par exemple en un convoyeur sans fin.

Le poste de dépose 4 peut comporter des moyens 45 pour l'ajout préalable d'ingrédients additionnels (par exemple des légumes) dans chaque contenant 2.

Ces moyens d'ajout 45 consistent par exemple en des moyens manuels ou en des moyens automatiques.

Le poste de dépose 4 comporte encore des moyens 42 pour la dépose des denrées alimentaires 1 dans chacun des contenants 2 convoyés, éventuellement par-dessus les ingrédients additionnels déjà présents.

Ces moyens de dépose 42 consistent par exemple en des moyens manuels ou en des moyens automatiques.

En aval de ces moyens de dépose 42, il est ici prévu également des moyens 43 pour la mise en oeuvre de l'étape de tassage C précitée.

Les moyens de tassage 43 comprennent par exemple un outil de tassement (non représenté) comportant une face d'appui, avantageusement lisse, apte à venir au contact de la surface libre 11 des denrées alimentaires 1 et à exercer une pression sur les denrées alimentaires, cette pression étant réglée pour assurer un bon remplissage du contenant sans détériorer l'intégrité des denrées.

En général, cet outil de tassement est amené à une distance fixe par rapport aux moyens de convoyage 41, et par conséquent à une distance fixe de la paroi de fond 22 des contenants 2 convoyés.

La surface de la face d'appui est légèrement inférieure à la surface de la paroi de fond 22 ou à la section de l'ouverture d'accès 23 du contenant 2, de manière à pouvoir recouvrir un maximum des denrées alimentaires 1 tout en évitant un contact avec les parois latérales 21 du contenant 2.

Ces moyens de tassage 43 ont avantageusement une course constante, réglable et reproductible.

Le poste de grillage 5 est dans une première réalisation conçu avantageusement sous la forme d'une machine rotative, tel qu'illustré sur les figures 5 et 6.

Ce poste de grillage 5 comporte ainsi des moyens rotatifs 51, pour le convoyage des contenants 2, qui se présentent sous la forme d'un carrousel se déplaçant en rotation selon un axe vertical central 51' (dit encore « axe de rotation central 51' »).

Grâce à ce carrousel 51, les contenants 2 cheminent ainsi selon une trajectoire circulaire centrée sur l'axe vertical central 51' entrainé en rotation.

Le carrousel 51 comporte en particulier un disque support 512 (figure 6) qui est solidaire de la base de l'axe vertical de rotation 51'.

Ce disque support 512 comporte sur son pourtour une pluralité d'emplacements 511 chacun aptes à recevoir et convoyer un contenant 2 qui arrive par exemple du poste de dépose 4 (côté amont) et qui est déchargé par exemple au niveau du poste de remplissage 6 (côté aval).

Chaque emplacement 511 reçoit directement un contenant 2, lorsqu'il s'agit d'un contenant « non déformable » ou il reçoit un berceau de réception du contenant, lorsqu'il s'agit d'un contenant « déformable ».

Ce poste de grillage 5 intègre également les moyens de marquage 3 précités, pour l'application du marquage 111 de type grillé sur les denrées alimentaires 1 au cours de leur cheminement au sein de ce poste de grillage 5.

Seuls quelques moyens de marquage 3 sont représentés sur la figure 6, dans un souci de simplification.

Les moyens de marquage 3 sont ici portés par des têtes 513 qui équipe le carrousel 51 et qui sont chacune agencées de sorte à s'étendre au-dessus et en regard (à l'aplomb) des emplacements 511 destinés à recevoir les contenants 2. En d'autres termes, chaque emplacement 511 est ainsi surmonté par des moyens de marquage 3.

Les emplacements 511 et les couples têtes 513 / moyens de marquage 3 sont régulièrement répartis sur la périphérie du carrousel 51, autour de son axe de rotation central 51'.

Les emplacements 511 du carrousel 51, ainsi que les moyens de marquage 3 associés, sont par exemple au nombre de 20 à 40.

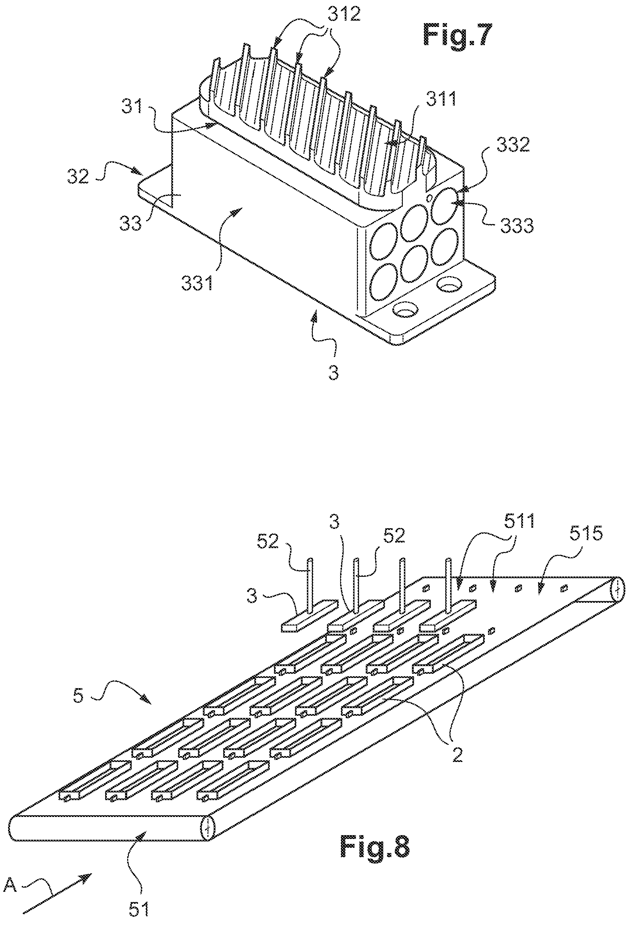

Un mode particulier de réalisation des moyens de marquage 3 est illustré schématiquement sur la figure 7.

Les moyens de marquage 3 comprennent ici un outil de marquage 32 comportant l'empreinte 31 qui est montée sur des moyens de chauffage 33.

L'empreinte 31 a une surface correspondant avantageusement, au jeu près (voire légèrement inférieure), à une section parallèle à la paroi de fond 22 et passant par les parois latérales 21 du contenant 2 ; autrement dit l'empreinte 31 présente préférentiellement une surface de marquage correspondant, au jeu près (voire légèrement inférieure), à la surface de l'ouverture d'accès 23 du contenant 2.

Les moyens de chauffage 33 comprend par exemple un bloc en matériau thermiquement conducteur 331 (par exemple un bloc inox, fonte, autre alliage métallique ou céramique) muni d'une pluralité de logements 332 servant d'emplacements pour des résistances électriques de chauffage 333 insérés ainsi au coeur du bloc 331.

Ces moyens de chauffage 33 sont ménagés en arrière de l'empreinte 31, à l'opposé d'un relief 311, pour assurer le chauffage de cette empreinte 31 par phénomène de conduction thermique.

Selon une variante de réalisation, les moyens de chauffage peuvent être ménagés en arrière ou au sein de l'empreinte 31, de sorte que l'empreinte 31 peut être chauffée par induction. Par exemple, l'élément conducteur du chauffage par induction peut être l'empreinte 31, tandis que l'aimant capable de créer le champ magnétique (comme une bobine) peut être disposé en arrière (à la place des moyens de chauffage 33) ou au sein de l'empreinte 31.

L'empreinte 31 peut être fixée au bloc métallique 331 ou elle peut être réalisée sous la forme d'un ensemble monobloc tel qu'illustré sur la figure 7.

L'empreinte 31 est munie du relief 311 déterminant le marquage 111 d'aspect « dessiné » destiné à être appliqué sur la surface des denrées alimentaires 1.

En l'occurrence et de manière non limitative, le relief 311 comporte un ensemble de structures saillantes 312 parallèles qui se présentent chacune sous la forme d'une nervure rectiligne.

De manière alternative, pour un grillage uniforme, l'empreinte 31 peut comporter une surface lisse, dépourvue du relief 311.

Selon une variante de réalisation, les moyens de chauffage sont ménagés en regard de l'empreinte 31, du côté du relief 311, pour appliquer directement les moyens de chauffage sur ladite empreinte 31.

Par exemple, ces moyens de chauffage comportent une source de chaleur issue de la combustion de gaz (flamme), qui est appliquée sur l'empreinte 31.

L'empreinte 31 à chauffer peut être en contact avec cette source de chaleur pendant un temps suffisant pour augmenter sa température jusqu'à une valeur déterminée, avant son rapprochement (voire sa mise en contact) avec les denrées alimentaires 1.

Les têtes 513 du poste de grillage 5 comportent encore chacune des moyens de manoeuvre 52 (représentés schématiquement sur la figure 3 et sur la figure 6). Chacun des moyens de manoeuvre 52 est relié à une de ses extrémité à une tête 513 et à son autre extrémité au moyen de marquage 3. Ils ont pour but d'assurer le déplacement relatif entre les moyens de convoyage du carrousel 51 portant les contenants 2 et les moyens de marquage 3.

Les moyens de manoeuvre 52 sont en particulier agencés pour assurer le positionnement des moyens de marquage 3 en regard (voire au travers) de l'ouverture d'accès 23 d'un contenant 2 et pour les amener temporairement au moins à proximité des denrées alimentaires 1 contenues dans le contenant 2 pour y appliquer le marquage 111 d'aspect grillé.

En l'occurrence, ces moyens de manoeuvre 52 assurent une manoeuvre en translation des moyens de marquage associés 3 selon une direction verticale, parallèle à l'axe de rotation vertical 51' du carrousel 51, pour réaliser des mouvements en montée et descente de l'empreinte 31 associée.

L'empreinte 31 s'étend dans un plan général qui est perpendiculaire à la direction verticale de translation ; l'empreinte 31 est ainsi destinée à cheminer en translation parallèlement à elle-même.

Cette manoeuvre s'effectue alors avantageusement entre deux positions :
- une position active dans laquelle lesdits moyens de marquage 3 d'une tête 513 (en particulier l'empreinte 31) se situent à une première distance des moyens de convoyage du carrousel 51 (notamment du disque support 512), adaptée au marquage des denrées alimentaires 1 contenues dans le contenant 2, et
- une position inactive dans laquelle les moyens de marquage 3 d'une tête 513 se situent à une seconde distance des moyens de convoyage du carrousel 51 (notamment du disque support 512), supérieure à ladite première distance, adaptée à écarter lesdits moyens de marquage 3 par rapport au contenant 2.

La position active est définie et maitrisée de sorte que les moyens de marquage 3 n'entrent pas en contact avec le contenant 2 (un tel contact pourrait altérer les qualités de contenant, notamment son étanchéité et donc la durée de conservation du produit ou bien son apparence visuelle).

Les moyens de manoeuvre 52 consistent par exemple en un vérin pneumatique qui est solidarisé avec une face arrière du bloc métallique 331 (opposée à sa face recevant l'empreinte 31).

Les moyens de marquage 3 ont avantageusement une course constante, réglable et reproductible.

Ces moyens de manoeuvre 52 sont avantageusement pilotés par des moyens de commande, par exemple du type automate programmable.

Il est ainsi possible d'ajuster à façon la course appliquée aux moyens de marquage 3 par les moyens de manoeuvre 52 associés.

En pratique, pendant la rotation du carrousel 51 et au regard d'un emplacement 511 portant un contenant 2 dans lequel se trouvent des denrées 1 à marquer (entre la prise en charge et l'évacuation de ce contenant 2), les moyens de manoeuvre 52 déplacent successivement les moyens de marquage 3 :
- depuis une position « relevée » inactive jusqu'à une position « abaissée » active, pour le marquage des denrées correspondantes, puis
- depuis une position « abaissée » active jusqu'à une position « relevée » inactive, une fois les denrées convenablement marquées et de sorte à libérer le contenant 2 correspondant.

Le carrousel 51 porte ainsi sur sa périphérie, et de manière régulièrement réparties, des têtes 513 qui sont associées chacune à des moyens de marquage 3 et à des moyens de manoeuvre 52 pour lesdits moyens de marquage 3.

L'ensemble des moyens de convoyage du carrousel 51, des moyens de marquage 3 et des moyens de manoeuvre 52 se présente ainsi sous la forme d'un carrousel.

Chaque emplacement 511 du carrousel 51 et les moyens de marquage 3 associées sont ainsi soumis à une rotation synchrone autour de l'axe de rotation vertical 51'.

De manière alternative, non représentée, les moyens de marquage 3 et les moyens de manoeuvre 52 sont fixes par rapport aux moyens de convoyage du carrousel 51 rotatifs.

Les moyens de convoyage du carrousel 51 se présentent avantageusement toujours sous la forme d'un carrousel tel que décrit ci-dessus notamment en relation avec la figure 6.

Une rotation pas à pas de ces moyens de convoyage du carrousel 51 amène séquentiellement les denrées alimentaires 1 dans leur contenant 2 à l'aplomb des moyens de marquage 3, pour le grillage séquentiel des denrées alimentaires 1 dans le contenant 2 sous-jacent.

Le poste de grillage 5 comporte encore avantageusement les moyens suivants (non représentés) :
- des moyens pour l'aspiration des effluents gazeux générés au sein de ce poste de grillage 5, et/ou
- des moyens pour le nettoyage de la ou des empreintes 31 en présence, avantageusement manoeuvrée(s) en position inactive.

Les moyens d'aspiration consistent par exemple en un système de hotte aspirante surmontée d'une cheminée pour l'évacuation des fumées.

Les moyens de nettoyage des empreintes consistent quant à eux par exemple en des moyens de raclage ou en des moyens de brossage des empreintes.

Les moyens de raclage consistent par exemple en un élément métallique fixe (par exemple une tôle souple) positionnée de manière à être à une distance fiable des empreintes 31.

La rotation du carrousel entraîne les empreintes 31 de sorte à coopérer avec l'élément métallique qui enlève les éventuels résidus de denrée alimentaire restés collés sur ces empreintes 31.

Suite à ce poste de grillage 5, les contenants 2 sont pris en charge par des moyens de convoyage 9 permettant le cheminement des contenants 2 au sein des postes aval 6, 7 et 8 successifs.

Le poste de remplissage 6 comporte des moyens pour l'incorporation d'ingrédients complémentaires au travers de l'ouverture d'accès 23 des contenants 2.

Ces moyens de remplissage 61 consistent par exemple en une doseuse volumétrique de liquide plus ou moins visqueux (comme de la saumure ou de l'huile) ou une doseuse de solide (comme du sel ou des herbes).

Le poste d'obturation 7 comprend quant à lui des moyens 71 pour le sertissage de l'élément de fermeture 24 au niveau de l'ouverture d'accès 23 du contenant 2.

Le poste de stérilisation 8 comprend quant à lui, par exemple, des moyens 81 du type autoclave (notamment du type autoclave air/vapeur ou du type autoclave à ruissellement d'eau surchauffée), pour la stérilisation du contenu du contenant 2.

Là encore, une telle installation selon l'invention permet d'obtenir des contenants 2, obturés et stérilisés, dans lesquels sont conditionnés des denrées alimentaires 1 dont la surface libre 11 (en regard de l'ouverture d'accès 23 obturée par l'élément d'obturation 24 rapporté) est pourvue d'un marquage 111 d'aspect grillé.

Une variante de réalisation du poste de grillage 5 est illustrée schématiquement sur la figure 8.

Dans cette variante de réalisation, les moyens de convoyage 51 du poste de grillage 5 se présente sous la forme d'un convoyeur linéaire (ou tapis de convoyage sans fin).

Le brin supérieur 515 de ce convoyeur linéaire 51 (s'étendant avantageusement dans un plan horizontal) comportent un ensemble d'emplacement 511 pour la réception des contenants 2.

Ces emplacements 511 sont ici agencés sur une pluralité de lignes transversales successives (perpendiculaire à la direction de cheminement).

Ce brin supérieur 515 est destiné à cheminer linéairement selon une direction de cheminement A, horizontale, par un mouvement du type pas à pas.

Ce brin supérieur 515 est surmonté par les moyens de marquage 3 et les moyens de manoeuvre 52 associés (représentés schématiquement selon la figure 8), similaires aux moyens décrits ci-dessus en relation avec les figures 5 à 7.

En particulier, les moyens de marquage 3 sont identiques à ceux décrits ci-dessus en relation avec la figure 7, avec l'outil de marquage comportant l'empreinte qui est montée sur des moyens de chauffage.

L'installation comporte ici plusieurs moyens de marquage 3 qui sont agencés sur une ligne transversale afin d'intervenir simultanément sur une ligne transversale d'emplacements 511.

Là encore, les moyens de manoeuvre 52 sont agencés pour assurer le positionnement des moyens de marquage 3 en regard (voire au travers) de l'ouverture d'accès 23 d'un contenant 2 et pour les amener temporairement au moins à proximité (voire au contact) des denrées alimentaires 1 contenues dans le contenant 2 pour y appliquer le marquage 111 d'aspect grillé.

En l'occurrence, ces moyens de manoeuvre 52 assurent une manoeuvre en translation des moyens de marquage associés 3 selon une direction verticale, perpendiculaire à la direction de cheminement A du brin supérieur 515 du convoyeur 51, pour réaliser des mouvements en montée et descente de l'empreinte 31 associée.

Dans ce cas, en pratique, le déplacement linéaire (avantageusement pas à pas) est commandé pour amener séquentiellement les denrées alimentaires 1 dans leur contenant 2 à l'aplomb des moyens de marquage 3.

Le convoyeur 51 permet l'arrêt temporaire d'un ou plusieurs contenants 2 lors de leur cheminement amont vers aval.

Pendant l'un de ces arrêts, les moyens de marquage 3 sont manoeuvrés de la position inactive à la position active, de sorte à marquer les denrées alimentaires 1 contenues dans le contenant 2.

Les moyens de marquage 3 sont maintenus dans cette position active pendant une durée déterminée, puis reviennent en position inactive.

Le convoyeur 51 est enfin manoeuvré de sorte que son brin supérieur 515 avance d'un pas, pour libérer la ligne transversale de denrées alimentaires 1 grillées et pour amener une nouvelle ligne transversale de denrées alimentaires 1 à griller sous les moyens de marquage 3.

En pratique, le procédé et l'installation selon l'invention permettent avantageusement l'obtention de denrées alimentaires 1 qui sont conditionnées dans un contenant 2 et dont seule leur surface libre 11 (s'étendant en regard de l'ouverture d'accès 23 du contenant 2) comporte alors un marquage 111 d'aspect grillé.

Lors de l'ouverture du contenant 2, le consommateur pourra alors observer immédiatement le grillage (avantageusement avec dessin/motif) des denrées alimentaires, conférant une qualité perçue supérieure pour le produit.

De manière générale, la présente invention peut être utilisée pour une large palette de denrées alimentaires dont par exemple :
- des conserves de poissons, par exemple filets de maquereaux, sardines, thons, rougets, etc,
- des morceaux de poisson ou de viande conditionnés dans d'autres types de contenants (barquettes par exemple),
- des aliments entrant dans la composition d'un plat cuisiné (par exemple une pièce de viande ou de poisson dans un contenant, avant remplissage avec d'autres ingrédients du plat).

Les avantages de l'invention sont notamment :
- une intégration facilitée dans un procédé existant du fait de la possibilité de faire le marquage des denrées directement dans le contenant final ;
- une répétabilité importante du marquage : l'empreinte est amenée toujours au même endroit dans le contenant, et il n'y a donc pas à gérer une orientation du produit sur un convoyeur;
- une facilité à modifier le motif du marquage souhaité, en fonction du relief de l'empreinte.

## Revendications

1. Procédé pour l'obtention de denrées alimentaires (1), tels que des filets de poissons, conditionnées dans un contenant (2), l'une au moins desdites denrées alimentaires (1) comportant un marquage (111) d'aspect grillé,
lequel procédé comprend les étapes suivantes :
- une étape (A) de fourniture de denrées alimentaires (1) à conditionner,
- une étape (B) de dépose des denrées alimentaires (1) dans ledit contenant (2), comportant une ouverture d'accès (23), de sorte que, d'une part, une surface libre (11) desdites denrées alimentaires (1) s'étende en regard de ladite ouverture d'accès (23) du contenant (2), et, d'autre part, lesdites denrées alimentaires reposent sur une surface de support rigide (22), et
- une étape (D) de grillage au cours de laquelle ledit marquage (111) d'aspect grillé est appliqué sur ladite surface libre (11) des denrées alimentaires (1) présentes dans le contenant (2).

2. Procédé selon la revendication 1, dans lequel ladite surface libre desdites denrées alimentaires est l'unique surface qui est grillée.

3. Procédé selon la revendication 1 ou la revendication 2, **caractérisé en ce que** l'étape de grillage (D) comprend les étapes suivantes :
- amener dans une position active des moyens de marquage (3) présentant une surface de marquage, lesdits moyens de marquage (3) étant aptes à appliquer ledit marquage (111) d'aspect grillé, cela en regard de l'ouverture d'accès (23) du contenant (2) et au moins à proximité de la surface libre (11) des denrées alimentaires (1) présentes dans le contenant (2),
- maintenir lesdits moyens de marquage (3) dans ladite position active, pendant un temps déterminé, pour appliquer le marquage (111) d'aspect grillé, et
- écarter lesdits moyens de marquage (3) par rapport à ladite surface libre (11) des denrées alimentaires (1) présentes dans le contenant (2).

4. Procédé selon la revendication 3, dans lequel ladite surface de marquage desdits moyens de marquage (3) est sensiblement égale à la surface de l'ouverture du contenant (2), de sorte à pouvoir marquer ladite surface libre desdites denrées alimentaires (1).

5. Procédé selon la revendication 4, dans lequel ladite surface de marquage s'emboîte dans ladite ouverture d'accès (23) dudit contenant (2) lors de la position active de l'étape (D) de grillage.

6. Procédé selon l'une des revendications 3 à 5, **caractérisé en ce que**, lors de l'étape de grillage (D), le temps de maintien en position active est compris dans une gamme de 0,5s à 5s, et **en ce que** la température des moyens de marquage (3) est comprise dans une gamme de 200°C à 800°C.

7. Procédé selon l'une quelconque des revendications 1 à 6, **caractérisé en ce que** l'étape de grillage (D) s'effectue au moyen d'une empreinte (31) qui est, d'une part, munie d'un relief (311) déterminant le marquage (111) appliqué sur les denrées alimentaires (1) et, d'autre part, élevée à une température adaptée à générer un marquage à chaud.

8. Procédé selon l'une quelconque des revendications 1 à 7, **caractérisé en ce qu'**il comprend encore :
- après l'étape de grillage (D), une étape (F) d'obturation de l'ouverture d'accès (23) du contenant (2), et/ou
- entre l'étape de dépose (B) et l'étape de grillage (D), une étape de tassement (C) des denrées alimentaires (1) présentes dans le contenant (2), et/ou
- avant l'étape de dépose (B) ou après l'étape de grillage (D), une étape (E) d'ajout d'ingrédients additionnels dans le contenant (2), et/ou
- suite à l'étape d'obturation (F), une étape (G) de stabilisation du contenu du contenant (2).

9. Installation pour l'obtention de denrées alimentaires (1) conditionnées dans un contenant (2), l'une au moins desdites denrées alimentaires (1) comportant un marquage (111) d'aspect grillé,
laquelle installation comprend les postes successifs suivants, agencés en série :
- un poste de dépose (4) muni de moyens de dépose de denrées alimentaires (1) dans ledit contenant (2) comportant une ouverture d'accès (23) et une paroi de fond (22)"
- un poste de grillage (5) muni (i) de moyens de convoyage (51) des contenants, (ii) de moyens de marquage (3) présentant une surface de marquage pour l'application dudit marquage (111) sur les denrées alimentaires (1), (iii) des moyens de manoeuvre (52), pour assurer le déplacement relatif entre les moyens de convoyage (51) et les moyens de marquage (3), de sorte à positionner les moyens de marquage (3) en regard de l'ouverture d'accès (23) d'un contenant (2) et les amener temporairement au moins à proximité des denrées alimentaires (1) contenues dans le contenant (2) pour y appliquer un marquage (111) d'aspect grillé.

10. Installation selon la revendication 9, dans laquelle ladite surface de marquage desdits moyens de marquage (3) est sensiblement égale à la surface de l'ouverture d'accès (23) du contenant (2).

11. Installation selon la revendication 10, dans laquelle ladite surface de marquage est apte à s'emboîter dans ladite ouverture d'accès (23) dudit contenant (2) lors de l'étape de grillage (D).

12. Installation selon l'une des revendications 9 à 11, dans laquelle ladite surface de marquage desdits moyens de marquage (3) équipant le poste de grillage (5) comprend au moins une empreinte (31) qui est munie d'un relief (311) déterminant le marquage (111) destiné à être appliqué et qui coopère avec des moyens de chauffage (33) pour son élévation en température.

13. Installation selon l'une des revendications 9 à 12, **caractérisée en ce que** les moyens de manoeuvre (52) coopèrent avec les moyens de marquage (3) pour leur manoeuvre entre :
- une position active dans laquelle lesdits moyens de marquage (3) se situent à une première distance des moyens de convoyage (51), adaptée au marquage des denrées alimentaires (1) contenues dans le contenant (2), et
- une position inactive dans laquelle lesdits moyens de marquage (3) se situent à une seconde distance des moyens de convoyage (51), supérieure à ladite première distance, adaptée à écarter lesdits moyens de marquage (3) par rapport au contenant (2).

14. Installation selon l'une quelconque des revendications 9 à 13, **caractérisée en ce que** :
- les moyens de convoyage (51) du poste de grillage (5) se présente sous la forme d'un carrousel dans lequel les moyens de convoyage (51) tournent autour d'un axe central de rotation (51'), ou
- les moyens de convoyage (51) se déplacent linéairement en dessous des moyens de marquage (3) et des moyens de manoeuvre (52) associés, ce déplacement linéaire étant commandé pour amener séquentiellement les denrées alimentaires (1) dans leur contenant (2) à l'aplomb des moyens de marquage (3).

15. Produit d'alimentation pouvant être obtenu par le procédé des revendications 1 à 8, comprenant des denrées alimentaires (1) conditionnées dans un contenant (2), **caractérisé en ce que** seule la surface libre (11) desdites denrées alimentaires (1), s'étendant au niveau d'une ouverture d'accès (23) dudit contenant (2) destiné à recevoir un élément d'obturation amovible (24), comporte un marquage (111) d'aspect grillé.

## Patentansprüche

1. Verfahren zum Erhalt von in einem Behälter (2) verpackten Lebensmitteln (1), wie etwa Fischfilets, wobei wenigstens eins der besagten Lebensmittel (1) eine Markierung (111) für gegrilltes Aussehen aufweist,
wobei das Verfahren die folgenden Schritte aufweist:
- einen Schritt (A) des zur Verfügung Stellens zu verpackender Lebensmittel (1),
- einen Schritt (B) des Eingebens der Lebensmittel (1) in den eine Zugangsöffnung (23) aufweisenden Behälter (2) dergestalt, daß sich einerseits eine freie Oberfläche (11) der Lebensmittel (1) zur Zugangsöffnung (23) des Behälters (2) hin erstreckt und daß andererseits die Lebensmittel auf einer festen Auflagefläche (22) aufliegen, und
- einen Schritt (D) des Grillens, im Verlaufe dessen die Markierung (111) für gegrilltes Aussehen auf die freie Oberfläche (11) der im Behälter (2) befindlichen Lebensmittel (1) aufgebracht wird.

2. Verfahren gemäß Anspruch 1, bei dem die besagte freie Oberfläche der Lebensmittel die einzige Oberfläche ist, die gegrillt ist.

3. Verfahren gemäß Anspruch 1 oder Anspruch 2, **dadurch gekennzeichnet, daß** der Schritt (D) des Grillens die folgenden Schritte aufweist:
- in eine aktive Position Bringen von eine Markierungsoberfläche aufweisenden Markierungsmitteln (3), wobei die Markierungsmittel (3) geeignet sind, die Markierung (111) für gegrilltes Aussehen aufzubringen, und dies der Zugangsöffnung (23) des Behälters (2) gegenüberliegend und wenigstens in der Nähe der freien Oberfläche (11) der im Behälter (2) befindlichen Lebensmittel (1),
- Festhalten der Markierungsmittel (3) in der aktiven Position während einer bestimmten Dauer, um die Markierung (111) für gegrilltes Aussehen aufzubringen, und
- Wegbewegen der Markierungsmittel (3) von der freien Oberfläche (11) der im Behälter (2) befindlichen Lebensmittel (1).

4. Verfahren gemäß Anspruch 3, bei dem die Oberfläche der Markierungsmittel (3) im Wesentlichen gleich der Oberfläche der Öffnung des Behälters (2) ist, so daß die freie Oberfläche der Lebensmittel (1) markiert werden kann.

5. Verfahren gemäß Anspruch 4, bei dem sich die Markierungsoberfläche in der aktiven Position des Schritts (D) des Grillens in die Zugangsöffnung (23) des Behälters (2) einfügt.

6. Verfahren gemäß einem der Ansprüche 3 bis 5, **dadurch gekennzeichnet, daß** die Dauer des in der aktiven Position Haltens während des Schritts (D) im einem Bereich von 0,5 s bis 5 s liegt und daß die Temperatur der Markierungsmittel (3) in einem Bereich von 200 °C bis 800 °C liegt.

7. Verfahren gemäß einem der Ansprüche 1 bis 6, **dadurch gekennzeichnet, daß** der Schritt (D) des Grillens durch einen Stempel (31) erfolgt, der einerseits mit einem die auf die Lebensmittel (1) aufgebrachte Markierung (111) bestimmenden Relief (311) versehen ist und der andererseits auf eine Temperatur gebracht ist, die geeignet ist, eine Heißmarkierung zu erzeugen.

8. Verfahren gemäß einem der Ansprüche 1 bis 7, **dadurch gekennzeichnet, daß** es außerdem aufweist:
- nach dem Schritt (D) des Grillens einen Schritt (F) des Verschließens der Zugangsöffnung (23) des Behälters (2) und/oder
- zwischen dem Schritt (B) des Einbringens und dem Schritt (D) des Grillens einen Schritt (C) des Zusammendrückens der im Behälter (2) befindlichen Lebensmittel (1) und/oder
- vor dem Schritt (B) des Einbringens oder nach dem Schritt (D) des Grillens einen Schritt (E) des Hinzufügens von zusätzlichen Zutaten in den Behälter (2) und/oder
- in Folge des Schritts (F) des Verschließens einen Schritt (G) des Stabilisierens des Inhalts des Behälters (2).

9. Vorrichtung zum Erhalt von in einem Behälter (2) verpackten Lebensmitteln (1), wobei wenigstens eins der besagten Lebensmittel (1) eine Markierung (111) für gegrilltes Aussehen aufweist,
wobei die Vorrichtung die nachstehenden aufeinander folgenden, in Serie angeordneten Stationen aufweist:
- eine Station zum Einbringen (4) mit Mitteln zum Einbringen von Lebensmitteln (1) in den eine Zugangsöffnung (23) und eine Bodenwandung (22) aufweisenden Behälter (2),
- eine Station zum Grillen (5) mit (i) Mitteln (51) zum Transportieren der Behälter, (ii) Mitteln zum Markieren (3), die eine Markierungsoberfläche zum Aufbringen der Markierung (111) auf die Lebensmittel (1) aufweist, (iii) Mitteln zum Manövrieren (52), um das relative Versetzen zwischen den Transportmitteln (51) und den Markierungsmitteln (3) sicherzustellen, damit die Markierungsmittel (3) gegenüber der Zugangsöffnung (23) eines Behälters (2) positioniert werden und um sie vorübergehend wenigstens in die Nähe der im Behälter (2) befindlichen Lebensmittel (1) zu bringen, um eine Markierung (111) für gegrilltes Aussehen aufzubringen.

10. Vorrichtung gemäß Anspruch 9, bei der die Oberfläche der Markierungsmittel (3) im Wesentlichen gleich der Oberfläche der Öffnung des Behälters (2) ist.

11. Vorrichtung gemäß Anspruch 10, bei der sich die Markierungsoberfläche in der aktiven Position des Schritts (D) des Grillens in die Zugangsöffnung (23) des Behälters (2) einfügt.

12. Vorrichtung gemäß einem der Ansprüche 9 bis 11, bei der die Markierungsoberfläche der die Grillstation (5) ausrüstenden Markierungsmittel (3) wenigstens einen Stempel (31) aufweist, der mit einem die aufzubringende Markierung (111) bestimmenden Relief (311) versehen ist und der mit Heizmitteln (33) zu dessen auf Temperatur Bringen zusammenwirkt.

13. Vorrichtung gemäß einem der Ansprüche 9 bis 12, **dadurch gekennzeichnet, daß** die Mittel zum Manövrieren (52) mit den Markierungsmitteln (3) zu deren Manövrieren zwischen:
- einer aktiven Position, in der sich die Markierungsmittel (3) in einem ersten Abstand von den Transportmitteln (51) befinden, der auf die Markierung der im Behälter (2) befindlichen Lebensmittel (1) abgestimmt ist, und
- einer inaktiven Position, in der sich die Markierungsmittel (3) in einem zweiten Abstand von den Transportmitteln (51) befinden, der größer als der erste Abstand ist und der darauf abgestimmt ist, die Markierungsmittel (3) vom Behälter (2) weg zu bewegen.

14. Vorrichtung gemäß einem der Ansprüche 9 bis 13, **dadurch gekennzeichnet, daß**
- die Transportmittel (51) der Grillstation (5) in Form eines Karussells ausgebildet sind, bei dem sich die Transportmittel (51) um eine zentrale Drehachse (51') drehen, oder
- sich die Transportmittel (51) linear unter den Markierungsmitteln (3) und den zugeordneten Manövriermitteln (52) bewegen, wobei das lineare Bewegen so gesteuert ist, daß die Lebensmittel (1) in deren Behälter (2) senkrecht unter die Markierungsmittel (3) gebracht werden.

15. Lebensmittel, das durch ein Verfahren gemäß einem der Ansprüche 1 bis 8 erhalten werden kann und das in einem Behälter (2) verpackte Lebensmittel (1) aufweist, **dadurch gekennzeichnet, daß** nur die freie Oberfläche (11) der besagten Lebensmittel (1), die sich im Bereich einer Zugangsöffnung (23) des Behälters (2) erstreckt, die dazu bestimmt ist, ein abnehmbares Verschlußelement (24) zu erhalten, eine Markierung (111) für gegrilltes Aussehen aufweist.

## Claims

1. A method for obtaining foodstuffs (1), such as fish fillets, packaged in a container (2), one at least of said foodstuffs (1) having a grilled-aspect marking (111),
which method comprises the following steps:
- a step (A) of supplying foodstuffs (1) to be packaged,
- a step (B) of filling the foodstuffs (1) into said container (2), including a access opening (23), so that, on the one hand, a free surface (11) of said foodstuffs (1) extends opposite said access opening (23) of the container (2), and on the other hand, said foodstuffs lie on a rigid support surface (22), and
- a grilling step (D) during which said grilled-aspect marking (111) is applied to said free surface (11) of the foodstuffs (1) present in the container (2).

2. Method according to claim 1, wherein said free surface of said foodstuffs is the single surface that is grilled.

3. Method according to claim 1 or claim 2, **characterized in that** the grilling step (D) comprises the following steps:
- bringing in an active position marking means (3) having a marking surface, said marking means (3) being adapted to apply said grilled-aspect marking (111), this opposite to the access opening (23) of the container (2) and at least near the free surface (11) of the foodstuffs (1) present in the container (2),
- holding said marking means (3) in said active position, during a determined time, to apply the grilled-aspect marking (111), and
- spacing said marking means (3) with respect to said free surface (11) of the foodstuffs (1) present in the container (2).

4. Method according to claim 3, wherein said marking surface of said marking means (3) is substantially equal to the surface of the opening of the container (2), so as to be able to mark said free surface of said foodstuffs (1).

5. Method according to claim 4, wherein said marking surface fits into said access opening (23) of said container (2) at the active position of the grilling step (D).

6. Method according to one of claims 3 to 5, **characterized in that**, at the grilling step (D), the time of holding in active position is comprised in a range of 0.5 s to 5 s, and **in that** the temperature of the marking means (3) is comprised in a range of 200°C to 800°C.

7. Method according to any one of claims 1 to 6, **characterized in that** the grilling step (D) is performed by means of an imprint (31) that, on the one hand, is provided with a relief (311) determining the marking (111) applied to the foodstuffs (1), and on the other hand, is brought to a temperature adapted to generate a hot marking.

8. Method according to any one of claims 1 to 7, **characterized in that** it further comprises:
- after the grilling step (D), a step (F) of closing the access opening (23) of the container (2), and/or
- between the filling step (B) and the grilling step (D), a step (C) of packing down the foodstuffs (1) present in the container (2), and/or
- before the filling step (B) or after the grilling step (D), a step (E) of adding additional ingredients into the container (2), and/or
- after the closing step (F), a step (G) of stabilizing the content of the container (2).

9. Facility for obtaining foodstuffs (1) packaged in a container (2), one at least of said foodstuffs (1) having a grilled-aspect marking (111),
which facility comprises the following successive stations, arranged in series:
- a filling station (4) provided with means (1) for filling the foodstuffs into said container (2) including an access opening (23) and a bottom wall (22),
- a grilling station (5) provided with (i) container conveying means (51), (ii) marking means (3) having a marking surface for the application of said marking (111) to the foodstuff (1), (iii) operating means (52), to ensure the relative displacement between the conveying means (51) and the marking means (3), so as to position the marking means (3) opposite the access opening (23) of a container (2) and to bring them temporarily at least in proximity of the foodstuffs (1) contained in the container (2) to apply thereon a grilled-aspect marking (111).

10. Facility according to claim 9, wherein said marking surface of said marking means (3) is substantially equal to the surface of the access opening (23) of the container (2).

11. Facility according to claim 10, wherein said marking surface is adapted to fit into said access opening (23) of said container (2) during the grilling step (D).

12. Facility according to one of claims 9 to 11, wherein said marking surface of said marking means (3) equipping the grilling station (5) comprises at least one imprint (31) that is provided with a relief (311) determining the marking (111) intended to be applied and that cooperates with heating means (33) for the temperature rising thereof.

13. Facility according to one of claims 9 to 12, **characterized in that** the operating means (52) cooperate with the marking means (3) for the operation thereof between:
- an active position in which said marking means (3) are located at a first distance from the conveying means (51), adapted for the marking of the foodstuffs (1) contained in the container (2), and
- an inactive position in which said marking means (3) are located at a second distance from the conveying means (51), higher that said first distance, adapted to space said marking means (3) with respect to the container (2).

14. Facility according to any one of claims 9 to 13, **characterized in that**:
- the conveying means (51) of the grilling station (5) is in the form of a carrousel in which the conveying means (51) turn about a central axis of rotation (51'), or
- the conveying means (51) move linearly under the marking means (3) and the associated operating means (52), this linear displacement being controlled to bring sequentially the foodstuffs (1) into their container (2) in vertical alignment with the marking means (3).

15. Foodstuff that can be obtained by the method of claims 1 to 8, comprising foodstuffs (1) packaged in a container (2), **characterized in that** only the free surface (11) of said foodstuffs (1), extending at the level of an access opening (23) of said container (2) intended to receive a removable closing element (24), has a grilled-aspect marking (111).
